# EUROPEAN PATENT APPLICATION

(11) **EP 4 389 972 A1**
(43) Date of publication of application: **26.06.2024**
(21) Application number: 22215609.3
(22) Date of filing: 21.12.2022
(51) Int. Cl.: D21H 27/10, D21H 27/30, D21H 27/38, B32B 29/00

(54) **MULTILAYER PAPERBOARD**

(71) Applicant: Billerud Aktiebolag (publ), 169 27 Solna (SE)
(72) Inventor: MAGNUSSON, Johan, 718 30 Frövi (SE)
(74) Representative: Kransell & Wennborg KB

(57) **Abstract**

There is provided a multilayer paperboard comprising a top layer, a back layer and a middle layer, wherein:
- the middle layer is arranged between the top layer and the back layer;
- the top layer is formed from a top layer furnish comprising at least 50% by dry weight softwood kraft pulp;
- the middle layer is formed from a middle layer furnish, wherein broke pulp and chemithermomechanical pulp (CTMP) constitutes at least 85% by dry weight of the middle layer furnish, said broke pulp has essentially the same pulp composition as the multilayer paperboard and the average fibre length of said CTMP is equal to or below 1.4 mm as measured according to ISO 16065-2:2014; and
- the back layer is formed from a back layer furnish comprising at least 80% by dry weight softwood kraft pulp.

## Description

### TECHNICAL FIELD

The present disclosure relates to the field of paperboard and in particular to multilayer paperboard.

### BACKGROUND

Paperboards are commonly made of one layer or out of two or more layers, wherein the latter is referred to as multilayer paperboards. Multilayer paperboards are used in for example packaging due to their mechanical properties.

For multilayer boards having three layers, mechanical strength is often provided through construction of an I-beam structure, with chemical pulp in the outer layers and bulky mechanical pulp in the middle layer.

Apart from mechanical properties, surface properties are also important.

### SUMMARY

There is an objective of the present disclosure to provide multilayer paperboard comprising three layers having sufficient strength as well as desirable surface properties. There is yet another objective of the present disclosure to provide a method for production of a multilayer paperboard comprising three layers having sufficient strength as well as desirable surface properties.

Accordingly, the present disclosure provides the following listing of itemized embodiments:
1. A multilayer paperboard comprising a top layer, a back layer and a middle layer, wherein:
   - the middle layer is arranged between the top layer and the back layer;
   - the top layer is formed from a top layer furnish comprising at least 50% by dry weight softwood kraft pulp;
   - the middle layer is formed from a middle layer furnish, wherein broke pulp and chemithermomechanical pulp (CTMP) constitutes at least 85% by dry weight of the middle layer furnish, said broke pulp has essentially the same pulp composition as the multilayer paperboard and the average fibre length of
   said CTMP is equal to or below 1.4 mm as measured according to ISO 16065-2:2014; and
   - the back layer is formed from a back layer furnish comprising at least 80% by dry weight softwood kraft pulp.
2. The paperboard of item 1, wherein the top layer comprises at least 60% by dry weight, such as at least 70% by dry weight, such as at least 80% by dry weight, softwood kraft pulp.
3. The paperboard of item 1 or 2, wherein the back layer comprises at least 90% by dry weight, such as at least 95% by dry weight softwood kraft pulp.
4. The paperboard of any one of the preceding items, wherein the CTMP is formed from at least 50% by dry weight hardwood.
5. The paperboard of any one of the preceding items, wherein at least 42% by dry weight, such as at least 50% by dry weight, such as at least 55% by dry weight of said broke pulp is derived from softwood kraft pulp.
6. The paperboard of any one of the preceding items, wherein the middle layer further comprises microfibrillated cellulose (MFC).
7. The paperboard of item 6, wherein the middle layer comprises MFC in an amount of 0.1-5.0 % by dry weight, such as 0.5-4 % by dry weight MFC.
8. The paperboard of any one of the preceding items, wherein the middle layer furnish comprises at least 45% by dry weight, such as at least 50 % by dry weight, such as at least 60% by dry weight of CTMP.
9. The paperboard of any one of the preceding items, wherein the softwood kraft pulp in the top layer furnish is bleached and/or the softwood kraft pulp in the bottom layer furnish is bleached.
10. The paperboard of any one of the preceding items, wherein the broke pulp and CTMP constitutes at least 90% by dry weight of the middle layer furnish.
11. The paperboard of any one of the preceding items, wherein the top layer and back layer are coated.
12. The paperboard of item 11, wherein the back layer is coated with at least one coating, such as a single-layer coating.
13. The paperboard of item 11 or 12, wherein the top layer is coated with more than one coating, such as a dual-layer coating or a triple-layer coating.
14. The paperboard of any one of the preceding items, wherein the CTMP is high-temperature chemithermomechanical pulp (HT-CTMP).
15. The paperboard of any one of the preceding items, wherein said CTMP has an average fibre length of equal to or below 1.2 mm, such as equal to or below 1.1 mm as measured according to ISO 16065-2:2014.
16. The paperboard of any one of the preceding items, wherein the Bendtsen surface roughness according to ISO 8791-2:2013 of the top layer is below 60 ml/min, such as below 40 ml/min.
17. The paperboard of any one of the preceding items, wherein the Bendtsen surface roughness according to ISO 8791-2:2013 of the back layer is below 500 ml/min, such as below 350 ml/min.
18. The paperboard of any one of the preceding items, wherein the Parker Print Surf (PPS) roughness measured according to ISO 8791-4:2007 of the top layer of the paperboard is below 1.5 µm, such as below 1.3 µm.
19. The paperboard of any one of the preceding items, wherein the specific formation number measured according to SCAN-P 92:09 of the whole board as measured on the top layer of the paperboard is 0.5-0.7 √g/m.
20. The paperboard of any one of the preceding items, wherein the CTMP and the softwood kraft pulp are virgin pulps.
21. The paperboard of any one of the preceding items, wherein the grammage according to ISO 536:2020 of the paperboard is 150-400 g/m², such as 180-350 g/m².
22. The paperboard of any one of the preceding items, wherein the density according to ISO 534:2011 of the paperboard is 750-800 kg/m³, such as 760-790 kg/m³.
23. The paperboard of any one of the preceding items, wherein the thickness according to ISO 534:2011 of the paperboard is 250-450 µm, such as 285-400 µm.
24. The paperboard of any one of the preceding items, wherein the internal bond strength, Scott Bond, according to Tappi T 569 Scott type of the paperboard is at least 150 J/m², such as at least 180 J/m².
25. The paperboard of any one of the preceding items, wherein the Z-strength according to Tappi T 541 z-direction test is at least 350 kPa, such as at least 400 kPa.
26. The paperboard of any one of the preceding items, wherein the bending resistance according to ISO 2493-2:2020 in MD of the paperboard is at least 145 mN, such as at least 155 mN.
27. The paperboard of any one of the preceding items, wherein the bending resistance according to ISO 2493-2:2020 in CD of the paperboard is at least 75 mN, such as at least 80 mN.
28. The paperboard of any one of the preceding items, wherein the short-span compression (SCT) strength according to ISO 9895:2008 in MD of the paperboard is at least 5.8 kN/m.
29. The paperboard of any one of the preceding items, wherein the short-span compression (SCT) strength according to ISO 9895:2008 in CD of the paperboard is at least 4.3 kN/m.
30. A method for producing a multilayer paperboard comprising a top layer, a back layer and a middle layer, wherein the method comprises the following steps:
   a. providing a top layer furnish comprising at least 50% by dry weight softwood kraft pulp;
   b. providing a middle layer furnish, wherein broke pulp and chemithermomechanical pulp (CTMP) constitutes at least 85% by dry weight of the middle layer furnish, said broke pulp has essentially the same pulp composition as the multilayer paperboard and the average fibre length of said CTMP is equal to or below 1.4 mm as measured according to ISO 16065-2:2014;
   c. providing a back layer furnish comprising at least 80% by dry weight softwood kraft pulp;
   d. form a top layer from the top layer furnish, a middle layer from the middle layer furnish, and a back layer from the back layer furnish; and
   e. form a paperboard from the top layer, middle layer and back layer so that the middle layer is arranged between the top layer and back layer.
31. The method of item 30, wherein at least 42% by dry weight, such as at least 50% by dry weight, such as at least 55% by dry weight of all non-broke pulp supplied to the method is softwood kraft pulp.
32. Use of a paperboard according to any one of the items 1-29 in packaging.

### BRIEF DESCRIPTION OF THE DRAWINGS

Fig 1 shows Bendtsen roughness (ml/min) according to ISO 8791-2:2013 of the top layer of the paperboard. The data points show the average value from 6 individual measurements. The lines have been drawn for visual guidance.
Fig 2 shows Bendtsen roughness (ml/min) according to ISO 8791-2:2013 of the back layer of the paperboard. The data points show the average value from 6 individual measurements. The lines have been drawn for visual guidance.
Fig 3 shows the PPS roughness (µm) according to ISO 8791-4:2007 of the top layer of the paperboard. The data points show the average value from 6 individual measurements. The lines have been drawn for visual guidance.
Fig 4 shows grammage according to ISO 536:2020 of the paperboard. The data points show the average value from 6 individual measurements. The lines have been drawn for visual guidance.
Fig 5 shows density according to ISO 534:2011 of the paperboard. The data points show the average value from 6 individual measurements. The lines have been drawn for visual guidance.
Fig 6 shows thickness according to ISO 534:2011 of the paperboard. The data points show the average value from 6 individual measurements. The lines have been drawn for visual guidance.
Fig 7 shows bending resistance according to ISO 2493-2:2020 in MD of the paperboard. The data points show the average value from 6 individual measurements. The lines have been drawn for visual guidance.
Fig 8 shows bending resistance according to ISO 2493-2:2020 in CD of the paperboard. The data points show the average value from 6 individual measurements. The lines have been drawn for visual guidance.

### DETAILED DESCRIPTION

As a first aspect of the present disclosure there is provided a multilayer paperboard comprising a top layer, a back layer and a middle layer, wherein:
- the middle layer is arranged between the top layer and the back layer;
- the top layer is formed from a top layer furnish comprising at least 50% by dry weight softwood kraft pulp;
- the middle layer is formed from a middle layer furnish, wherein broke pulp and chemithermomechanical pulp (CTMP) constitutes at least 85% by dry weight of the middle layer furnish, said broke pulp has essentially the same pulp composition as the multilayer paperboard and the average fibre length of said CTMP is equal to or below 1.4 mm as measured according to ISO 16065-2:2014; and
- the back layer is formed from a back layer furnish comprising at least 80% by dry weight softwood kraft pulp.

CTMP is a bulky mechanical pulp. It is beneficial to include CTMP in the middle layer as it decreases the density, i.e. increases the bulk, of the paperboard. A high bulk is preferred as less fibres are used per gram of paperboard. By designing the paperboard in an I-beam structure with chemical pulp in the outer layers and bulky mechanical pulp in the middle layer, strength properties are provided. Within the content of the present disclosure, CTMP also includes high-temperature chemithermomechanical pulp (HT-CTMP). When producing HT-CTMP a higher preheating temperature, typically above 170 °C, is used to produce the pulp.

The average fibre length of said CTMP is equal to or below 1.4 mm. Typically the average fibre length of said CTMP is equal to or below 1.2 mm, such as equal to or below 1.1 mm. The average fibre length of said CTMP is measured according to ISO 16065-2:2014. The CTMP may be a mix of two, or more, types of CTMP from different wood species and that mix has an average fibre length of equal to or below 1.4 mm, such as equal to or below 1.2 mm, such as equal to or below 1.1 mm as measured according to ISO 16065-2:2014. Alternatively, the CTMP constitutes of one type from a single wood specie and that type has an average fibre length being equal to or below 1.4 mm, such as equal to or below 1.2 mm, such as equal to or below 1.0 mm. Typically, at least 50 wt% of the CTMP is hardwood CTMP. Preferred types of hardwood are birch wood and/or maple wood. Measurements of pulp lengths can be conducted with an instrument MAP-Q from Valmet OY if the measurements are conducted off-line in lab scale. Alternatively, the measurements can be conducted on-line, and the instrument MAP from Valmet OY can in such case be used.

Typically, the middle layer furnish comprises at least 45% by dry weight, such as at least 50 % by dry weight, such as at least 60% by dry weight of said CTMP having an average fibre length of equal to or below 1.4 mm as measured according to ISO 16065-2:2014, which is beneficial for the surface properties.

Broke pulp is formed from trimmings and/or produced, but damaged, board, and, consequently the broke pulp has essentially the same pulp composition as the paperboard. The middle layer furnish is constituted by at least 85 % by dry weight of CTMP and broke pulp. The broke pulp and CTMP may constitute at least 90% by dry weight, such as at least 95% by dry weight of the middle layer furnish. To still achieve sufficient strength in the middle layer, the broke comprises a high amount of softwood kraft pulp as possible. Hence, the amount of softwood kraft pulp is high in the outer layers. Which means that at least 80% by dry weight of the back layer is from softwood kraft pulp and that at least 50% by dry weight of the top layer is from softwood kraft pulp. Such a high proportion of softwood kraft pulp in the top layer will, however, have a negative impact on the surface properties. To compensate for this negative impact, the inventors have realized that if the average fibre length of said CTMP is equal to or below 1.4 mm as measured according to ISO 16065-2:2014, the surface properties are still satisfactory.

Surface properties of the paperboard includes Bendtsen surface roughness. Bendtsen surface roughness is measured according to ISO 8791-2:2013. The Bendtsen surface roughness of the top layer is typically below 60 ml/min, such as below 40 ml/min. The Bendtsen surface roughness of the back layer is typically below 500 ml/min, such as below 350 ml/min. It is preferred that the surface roughness of the top layer is lower than the surface roughness of the back layer since the top layer is used facing the customer. Another surface property is Parker Print Surf (PPS) roughness (µm) measured according to ISO 8791-4:2007. The PPS roughness of the top layer of the paperboard is typically below 1.5 µm, such as below 1.3 µm. Yet another surface property is specific formation number measured according to SCAN-P 92:09. Formation is a measure of how even the surface is, i.e. that there are as few fibre flocs as possible and that the fibres are evenly distributed in all directions. A low formation is beneficial for printing as the surface is more even. The specific formation number of the whole board as measured on the top layer of the paperboard is typically 0.5-0.7 √g/m.

The proportion of softwood kraft pulp in the top layer may be even higher, such as at least 60 % by dry weight, such as at least 70% by dry weight, such as at least 80% by dry weight. The proportion of softwood kraft pulp in the back layer may be at least 90% by dry weight, such as at least 95 % by dry weight.

As a consequence of the amount of softwood kraft pulp being high in the outer layers, at least 42% by dry weight, such as at least 50% by dry weight, such as at least 55% by dry weight, of the broke pulp may be derived from softwood kraft pulp. An upper limit may be 66% by dry weight.

These percentages correspond to how much of the non-broke pulp supplied to the method of the second aspect of the present disclosure that is softwood kraft pulp. This is discussed and illustrated below.

Further, less than 17% by dry weight, such as less than 10% by dry weight, of the broke pulp may be derived from hardwood kraft pulp.

The broke pulp in the middle layer furnish typically comprises at least 30 % by dry weight, such as at least 40 % by dry weight, such as at least 50% by dry weight softwood kraft pulp.

The CTMP and the softwood kraft pulp are typically virgin pulps. Alternatively, in one embodiment, at least one of the virgin pulps is partly replaced by secondary fibres.

Typically, the pulps are market pulps. One or more of the pulps may also be never-dried pulps.

The middle layer may further comprise microfibrillated cellulose (MFC). MFC provides additional strength to the middle layer, and thereby to the paperboard. Typically, the middle layer comprises MFC in an amount of 0.1-5.0 % by dry weight, such as 0.5-4 % by dry weight by dry weight MFC. The MFC is added to the middle layer furnish forming the middle layer.

In the context of the present disclosure, MFC means nano-scale cellulose particle fibres or fibrils with at least one dimension less than 100 nm. MFC comprises partly or totally fibrillated cellulose or lignocellulose fibres. The liberated fibrils have a diameter less than 100 nm, whereas the actual fibril diameter or particle size distribution and/or aspect ratio (length/width) depends on the source and the manufacturing methods. The smallest fibril is called elementary fibril and has a diameter of approximately 2-4 nm, while it is common that the aggregated form of the elementary fibrils, also defined as microfibril is the main product that is obtained when making MFC e.g. by using an extended refining process or a pressure-drop disintegration process. Depending on the source and the manufacturing process, the length of the fibrils can vary from around 1 to more than 10 micrometers.

There are different synonyms for MFC such as cellulose microfibrils, fibrillated cellulose, nanofibrillated cellulose (NFC), fibril aggregates, nanoscale cellulose fibrils, cellulose nanofibres, cellulose nanofibrils (CNF), cellulose microfibres (CMF), cellulose fibrils, microfibrillar cellulose, microfibril aggregrates and cellulose microfibril aggregates. MFC can also be characterized by various physical or physical-chemical properties such as large surface area or its ability to form a gel-like material at low solids content (1-5 wt.%) when dispersed in water. The cellulose fibre is preferably fibrillated to such an extent that the final specific surface area of the formed MFC is from about 1 to about 200 m²/g, or more preferably 10-150 m²/g when determined for a freeze-dried material with the BET method (Brunauer, Stephen, Paul Hugh Emmett, and Edward Teller. "Adsorption of gases in multimolecular layers." Journal of the American chemical society 60.2 (1938): 309-319.). Nitrogen (N₂) gas adsorption isotherms are recorded using an ASAP 2020 (Micromeritics, USA) instrument. Measurements are performed at liquid nitrogen temperatures (i.e., 77 K), and the specific surface areas of the samples were obtained from the isotherms using the BET method. After fibrillation the Schopper Riegler (SR) is preferably above 90 as measured according to the standard ISO 5267-1:1999.

Various methods exist to make MFC, such as single or multiple pass refining, pre-hydrolysis followed by refining or high shear disintegration or liberation of fibrils. One or several pre-treatment step(s) may be required in order to make MFC manufacturing both energy efficient and sustainable. The cellulose fibres of the pulp to be supplied may thus be pre-treated enzymatically or chemically, for example to hydrolyse or swell fibre or reduce the quantity of hemicellulose or lignin.

The nanofibrillar cellulose may contain some hemicelluloses; the amount is dependent on factors such as plant source and pulping process. Mechanical disintegration of the pre-treated fibres, e.g. hydrolysed, pre-swelled, or oxidized cellulose rawmaterial is carried out with suitable equipment such as a refiner, grinder, homogenizer, collider, friction grinder, ultrasound sonicator, fluidizer such as microfluidizer, macrofluidizer or fluidizer-type homogenizer. Depending on the MFC manufacturing method, the product might also contain fines or e.g. other chemicals present in wood fibres or in papermaking process. The product might also contain various amounts of micron size fibre particles that have not been efficiently fibrillated. MFC is produced from wood cellulose fibres, both from hardwood or softwood fibres. It can also be made from, agricultural fibres such as wheat straw pulp, bamboo, bagasse, or other non-wood fibre sources. It is preferably made from pulp of virgin fibre, e.g. mechanical, chemical and/or thermomechanical pulps, preferably never-dried fibres. It can also be made from broke or recycled paper.

The above described definition of MFC includes, but is not limited to, the proposed TAPPI standard W13021 on cellulose nanofibril (CNF) defining a cellulose nanofibre material containing multiple elementary fibrils with both crystalline and amorphous regions, having a high aspect ratio with width of 5-30nm and aspect ratio usually greater than 50.

The softwood kraft pulp in the top layer furnish is typically bleached and/or the softwood kraft pulp in the bottom layer furnish is typically bleached. Bleached pulp is beneficial for printing properties.

The grammage according to ISO 536:2020 of the paperboard is typically 150-400 g/m², such as 180-350 g/m².

The density according to ISO 534:2011 of the paperboard is typically 750-800 kg/m³, such as 760-790 kg/m³.

The thickness according to ISO 534:2011 of the paperboard is typically 250-450 µm, such as 285-400 µm.

The internal bond strength, Scott Bond, according to Tappi T 569 Scott type of the paperboard is typically at least 150 J/m², such as at least 180 J/m².

The Z-strength according to Tappi T 541 z-direction test is typically at least 350 kPa, such as at least 400 kPa.

The bending resistance according to ISO 2493-2:2020 in MD of the paperboard is typically at least 145 mN, such as at least 155 mN.

The bending resistance according to ISO 2493-2:2020 in CD of the paperboard is typically at least 75 mN, such as at least 80 mN.

The short-span compression (SCT) strength according to ISO 9895:2008 in MD of the paperboard is typically at least 5.8 kN/m.

The short-span compression (SCT) strength according to ISO 9895:2008 in CD of the paperboard is typically at least 4.3 kN/m.

The top layer and back layer are typically coated with at least one coating on each side. The coating typically comprises pigments and binder. The back layer is typically coated with a single-layer coating and the top layer is typically coated with more than one coating, such as a dual-layer coating or triple-layer coating. Suitable pigments are clay and/or calcium carbonate and/or talc.

As a second aspect the present disclosure provides a method for producing a multilayer paperboard comprising a top layer, a back layer and a middle layer, wherein the method comprises the following steps:
a. providing a top layer furnish comprising at least 50% by dry weight softwood kraft pulp;
b. providing a middle layer furnish, wherein broke pulp and chemithermomechanical pulp (CTMP) constitutes at least 85% by dry weight of the middle layer furnish, said broke pulp has essentially the same pulp composition as the multilayer paperboard and the average fibre length of said CTMP is equal to or below 1.4 mm as measured according to ISO 16065-2:2014;
c. providing a back layer furnish comprising at least 80% by dry weight softwood kraft pulp;
d. form a top layer from the top layer furnish, a middle layer from the middle layer furnish, and a back layer from the back layer furnish; and
e. form a paperboard from the top layer, middle layer and back layer so that the middle layer is arranged between the top layer and back layer.

Typically, the top layer furnish, middle layer furnish and back layer furnish are each provided from separate headboxes on separate forming wires and thereafter combined, for example by gusseting and/or in the press section of the board machine. Alternatively, all three furnishes are provided from a multi-layer headbox directly onto one forming wire.

The strength of the middle layer may be further improved by addition of starch to the middle layer furnish. Starch is preferably added in an amount of 1.5-7.0 kg/tonne based on dry weight of the middle layer furnish, such as 2.0-6.0 kg/tonne based on dry weight of the middle layer furnish. To further improve the strength of the paperboard, there is typically a starch addition by spraying between the furnishes prior to combining. Preferably there is more starch added between the middle layer furnish and the top layer furnish than between the middle layer furnish and the back layer furnish. The inventors have realized that it is beneficial for strength properties of the final paperboard if there is such addition. Typically, the addition between middle layer furnish and top layer furnish is 0.3-1.2 g/m². Typically, the addition between middle layer furnish and back layer furnish is 0.2-1.1 g/m².

In one embodiment, the method comprises coating the top layer and the back layer. The top layer is typically coated with a dual-layer coating and the back layer is typically coated with a single layer coating. For the dual-layer coating drying between the application of a first coating layer and the application of a second coating layer can be conducted. For the single layer coating, drying is typically conducted after coating. Drying is typically performed with non-contact drying, such as IR and/or hot air, or contact drying, such as a drying cylinder, or a combination of non-contact and contact drying. The present disclosure is not limited to any particular coating technique and several different types of techniques, can thus be used. The techniques includes: blade coating, rod coating, air-knife coating, rotogravure coating and/or curtain coating. All coatings may be applied in-line (also referred to as on-line). In such case, the productivity is increased by eliminating the handling operations linked to off-line treatment and by eliminating, or at least reducing, the amount of waste. Alternatively, the coatings may also be applied off-line.

In an embodiment, at least 40% by dry weight, such as at least 50% by dry weight, such as at least 55% by dry weight of all non-broke pulp supplied to the method is softwood kraft pulp. An upper limit may be 66% by dry weight.

This embodiment can be illustrated by a first multilayer paperboard having the following composition:
- 50 g/m² top layer comprising 36 g/m² (72%) softwood kraft pulp and 14 g/m² hardwood kraft pulp;
- 125 g/m² middle layer comprising 60 g/m² CTMP, 60 g/m²broke pulp and 5 g/m² softwood kraft pulp; and
- 50 g/m² back layer comprising only softwood kraft pulp.

Out of all non-broke pulp supplied to the method of producing the first multilayer paperboard, (36+5+50)/(36+14+60+5+50) = 55% is softwood kraft pulp and 14/(36+14+60+5+50) = 8.5% is hardwood kraft pulp.

This embodiment can also be illustrated by a second multilayer paperboard having the following composition:
- 60 g/m² top layer comprising 45 g/m² (75%) softwood kraft pulp and 15 g/m² hardwood kraft pulp;
- 150 g/m² middle layer comprising 75 g/m² CTMP and 75 g/m² broke pulp; and
- 50 g/m² back layer comprising only softwood kraft pulp.

Out of all non-broke pulp supplied to the method of producing the second multilayer paperboard, (45+50)/(45+15+75+50) = 51% is softwood kraft pulp and 15/(45+15+75+50) = 8.1% is hardwood kraft pulp.

This embodiment can also be illustrated by a third multilayer paperboard having the following composition:
- 50 g/m² top layer comprising 26 g/m² (52%) softwood kraft pulp and 24 g/m² hardwood kraft pulp;
- 120 g/m² middle layer comprising 65 g/m² CTMP and 55 g/m² broke pulp; and
- 40 g/m² back layer comprising only softwood kraft pulp.

Out of all non-broke pulp supplied to the method of producing the third multilayer paperboard, (26+40)/(26+24+65+40) = 43% is softwood kraft pulp and 24/(26+24+65+40) = 15.5% is hardwood kraft pulp.

This embodiment can also be illustrated by a fourth multilayer paperboard having the following composition:
- 50 g/m² top layer comprising only softwood kraft pulp;
- 120 g/m² middle layer comprising 15 g/m² softwood kraft pulp, 55 g/m² CTMP and 50 g/m² broke pulp; and
- 40 g/m² back layer comprising only softwood kraft pulp.

Out of all non-broke pulp supplied to the method of producing the fourth multilayer paperboard, (50+15+40)/(50+15+55+40) = 66% is softwood kraft pulp and ₀% is hardwood kraft pulp.

Accordingly, less than 17% by dry weight, such as less than 10% by dry weight of all non-broke pulp supplied to the method may be hardwood kraft pulp.

The examples and embodiments discussed above in connection to the first aspect applies to the second aspect *mutatis mutandis.*

As a third aspect of the present disclosure there is provided the use of a paperboard according to the first aspect in packaging.

The packaging may be a package for food or liquids. Alternative, the packaging is a package for non-food products.

The examples and embodiments discussed above in connection to the first and second aspect applies to the third aspect *mutatis mutandis.*

### EXAMPLES

### Manufacturing of a 3-layered paperboard

In a full-scale paperboard machine 3-layered boards were produced. Each layer was produced from individual headboxes forming the individual layers on individual forming wires that were subsequently combined. The wire speed was 709 m/min and the jet speed was 730 m/min for all wires and headboxes. The top layer was coated with a dual-layer coating with a grammage of about 25 g/m² and the back layer with a single-layer coating with a grammage of 6 g/m².

The pulp composition in the top layer furnish was a mix of 25 wt% bleached softwood kraft pulp (SW kraft) and 75 wt% bleached hardwood kraft pulp (HW kraft). The pulp composition in the back layer furnish was 100 wt% of SW kraft.

The pulp composition for the middle layer was varied, which is further laid out below.

### Paperboard with a thickness of about 200 µm using birch HT-CTMP in the middle layer

For the middle layer furnish, a pulp mixture of bleached CTMP (CTMP), broke and bleached hardwood kraft was used. The CTMP was either 100 % of CTMP from spruce, or a mixture consisting of 33 wt% by dry weight HT-CTMP from spruce and 67 wt% by dry weight of HT-CTMP from birch. The pulp composition for each layer is shown in Table 1 below.

The top layer had a grammage of about 55 g/m², the middle layer a grammage of about 95 g/m² and the back layer a grammage of about 39 g/m².

The total CTMP content represents how much CTMP constitutes the middle layer. Each column of type of CTMP displays how much of that total content each type of CTMP was added.

The average fibre length is of the total CTMP added. If only one type of CTMP was added, it is the average fibre length of that type. If a mix of CTMPs were added it is the average fibre length of that mix.

The boards were calendered using a line load of about 55 kN/m and specific formation number according to SCAN-P 92:09 was measured on every 4^{th} sample of paperboard produced.

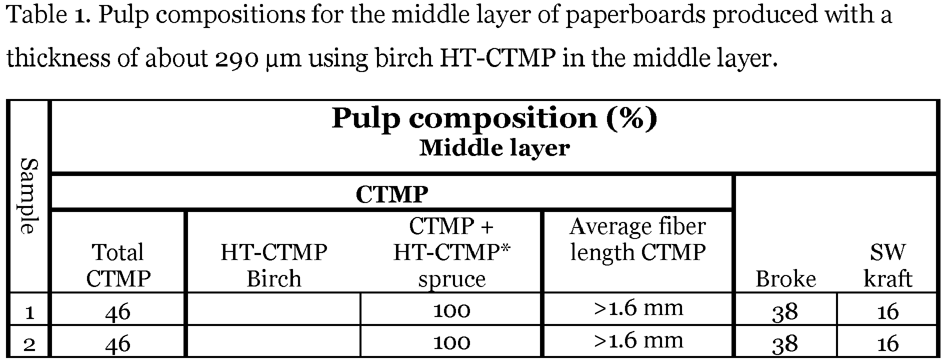

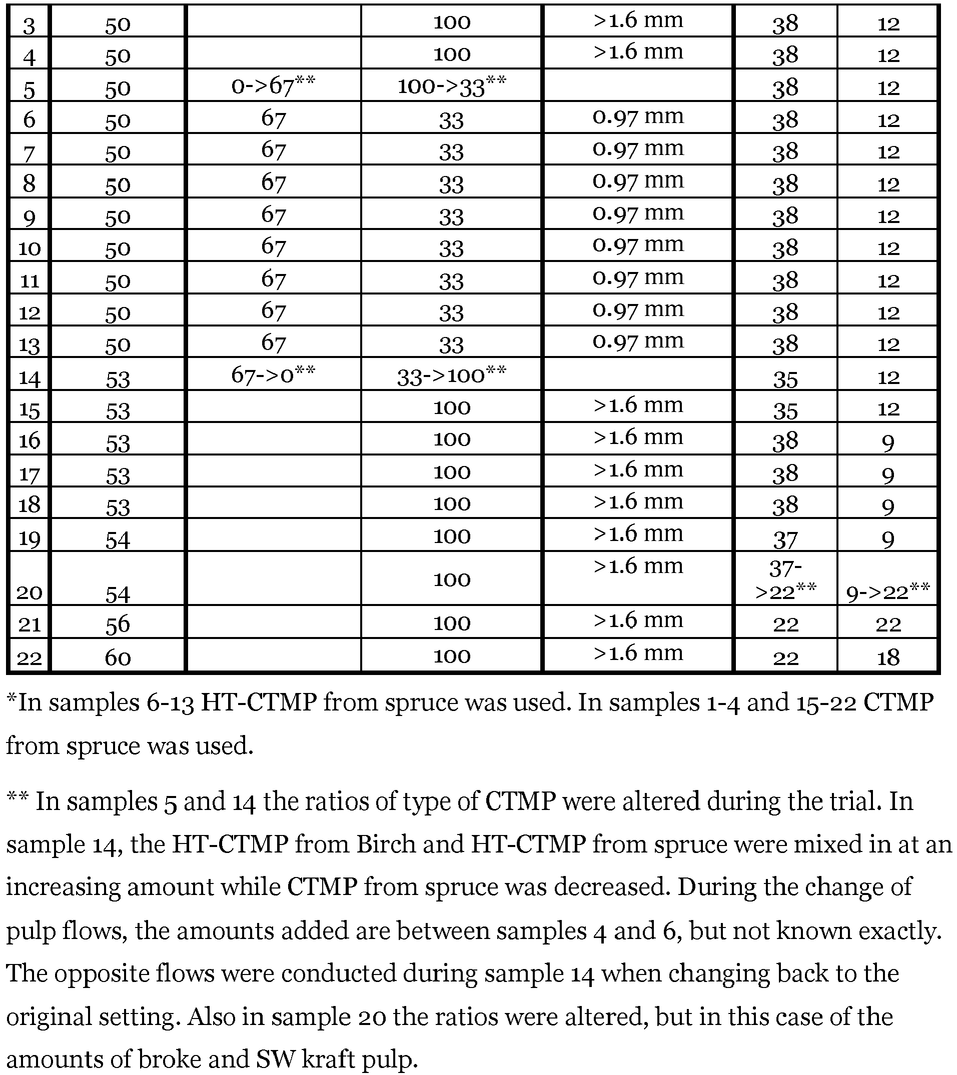

The specific formation number is shown in Table 2 below.

**Table 2. Specific formation numbers of the paperboards.**

| **Sample** | **Specific Formation (√g/m)** |
|---|---|
| 1 | 0.62 |
| 5 | 0.59 |
| 9 | 0.52 |
| 13 | 0.53 |
| 17 | 0.65 |
| 21 | 0.63 |

For samples 9 and 13 a clear improvement in formation was achieved. Also for sample 5, wherein some amount of HT-CTMP from birch was used, the formation was improved compared with usage of only CTMP from spruce (samples 1, 17 and 21).

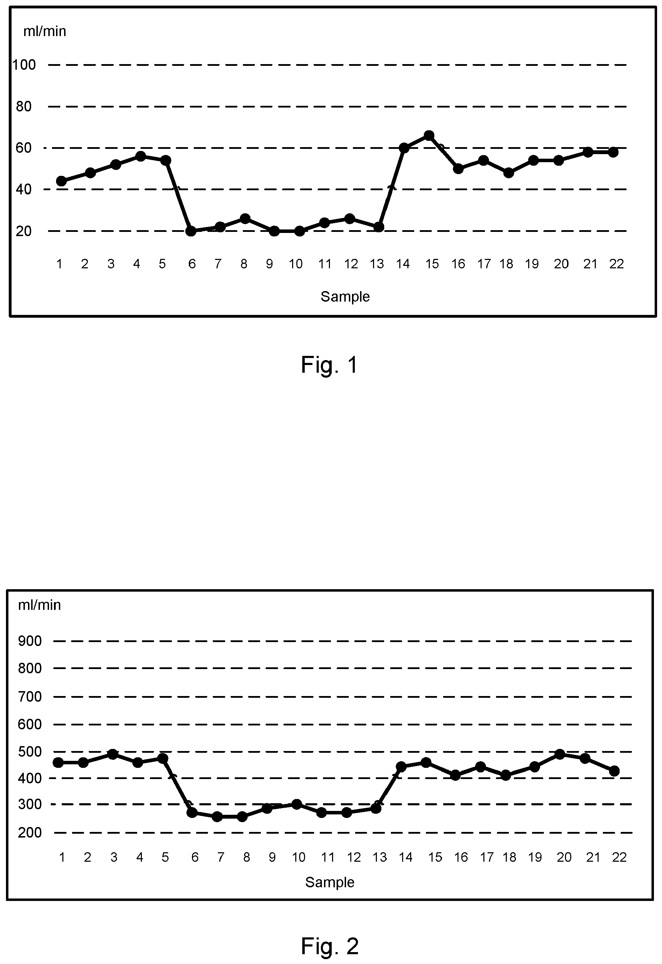

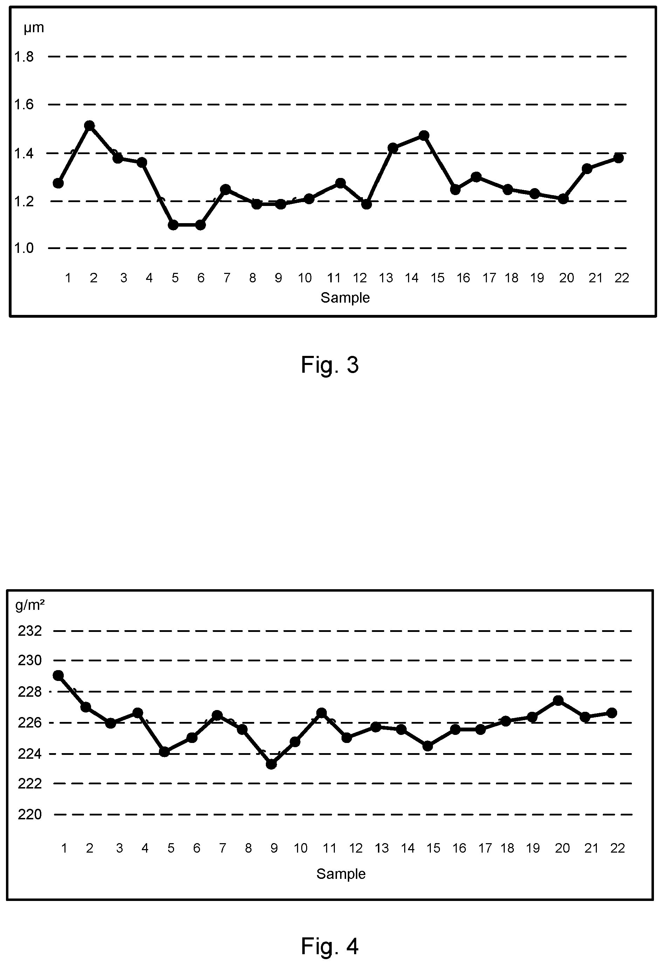

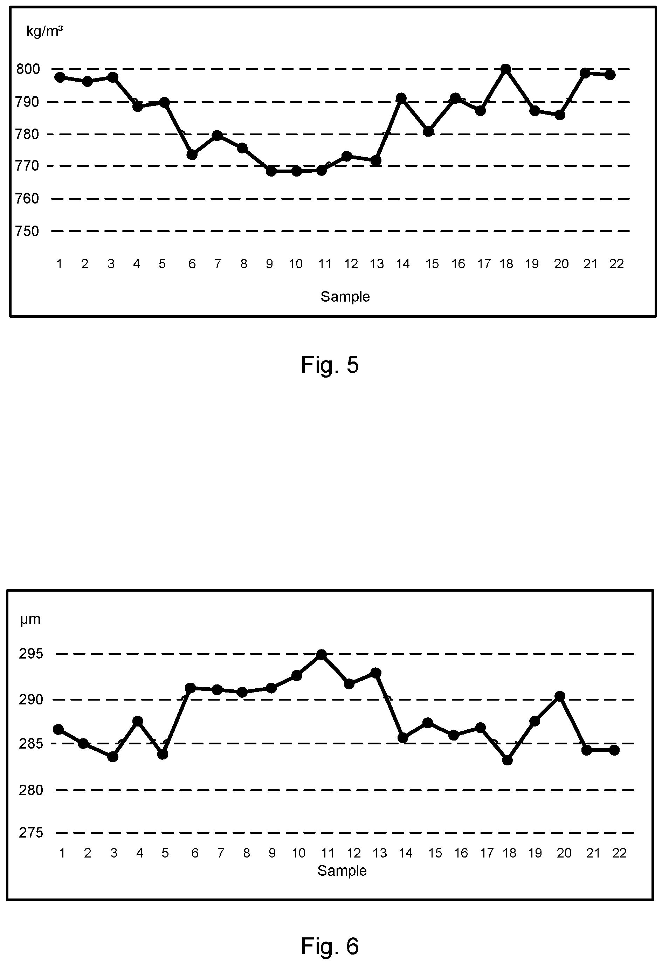

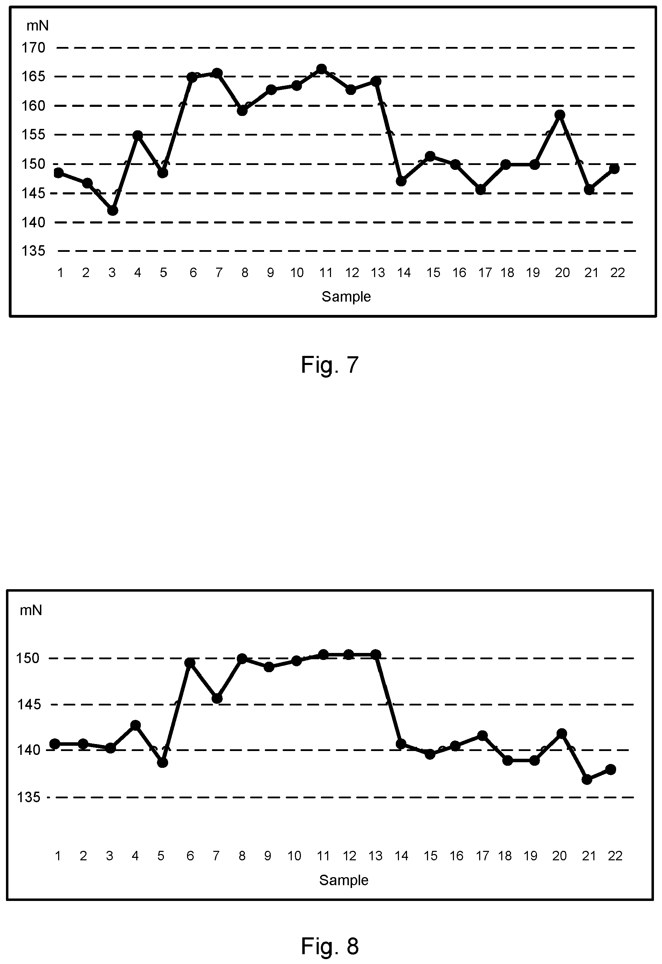

The paperboard was further evaluated with regards to the following, and the results shown in figures 1-8.
- Bentsen surface roughness on the top layer (Fig. 1)
- Bentsen surface roughness on the back layer (Fig. 2)
- PPS roughness on the top layer (Fig. 3)
- Total grammage of the paperboard (Fig. 4)
- Density of the paperboard (Fig. 5)
- Thickness of the paperboard (Fig. 6)
- Bending resistance in MD (Fig. 7).
- Bending resistance in CD (Fig. 8).

As is shown, for sample 6-13 a combination of decreased surface roughness, PPS smoothness, decreased density (increased bulk), and increased bending resistance in both MD and CD were obtained.

### Manufacturing of paperboard with a thickness of about 290 µm using birch CTMP in the middle layer

For this middle layer a mixture of 50 wt% total content of CTMP, 38 wt% broke and 12 wt% SW kraft was used. The CTMP was a 50/50 (wt/wt) mixture between CTMP from Spruce and CTMP from birch. The CTMP from birch from was itself a mixture consisting of 67 wt% by dry weight CTMP from birch and 33 wt% CTMP from spruce. Moreover, yet another paperboard was produced from HT-CTMP from Birch and HT-CTMP from spruce in the middle layer. The pulp compositions of the middle layers are shown in table 3 below.

The total CTMP content represents how much CTMP constitutes the middle layer. Each column of type of CTMP displays how much of that total content each type of CTMP was added.

The average fibre length is of the total CTMP added. If only one type of CTMP was added, it is the average fibre length of that type. If a mix of CTMPs were added it is the average fibre length of that mix.

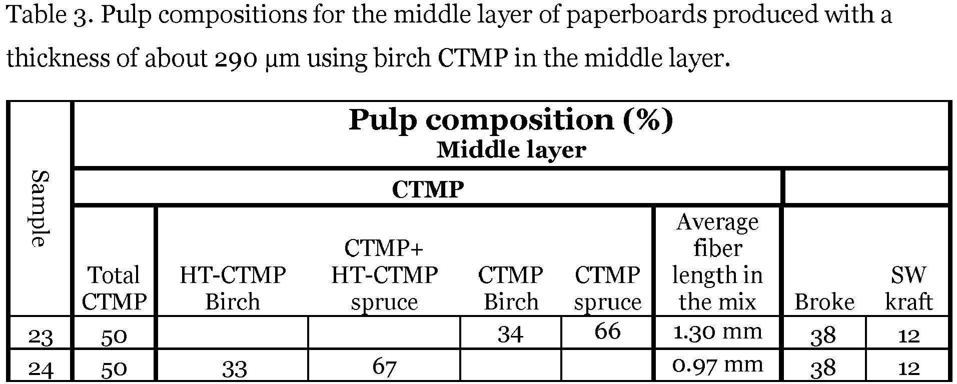

The boards were calendered using a line load of about 50 kN/m.

The results of those boards are presented in table 4 below.

**Table 4. Surface properties and grammage of paperboards having a thickness of about 290 µm and middle layer containing CTMP from birch**

| Sample | 23 | 24 |
|---|---|---|
| Bentsen surface roughness on the top layer (ml/min) | 35 | 37 |
| Bentsen surface roughness on the back layer (ml/min) | 275 | 250 |
| PPS roughness on the top layer (µm) | 1.15 | 1.23 |
| Total grammage of the paperboard (g/m²) | 227 | 226 |

As is shown, just as for HT-CTMP from birch also CTMP from birch in the middle layer provides a combination of low surface roughness and PPS smoothness of the outer layers, i.e. beneficial surface properties.

### Manufacturing of paperboard with a thickness of about 405µm using birch HT-CTMP in the middle layer

For this middle layer a mixture of 50 wt% total content of CTMP, 38 wt% broke and 12 wt% SW kraft was used. The CTMP was either CTMP from spruce, or HT-CTMP from birch and spruce in a mixture consisting of 67 wt% by dry weight HT-CTMP from birch and 33 wt% HT-CTMP from spruce, or a mixture of CTMP from spruce and HT-CTMP from the birch-spruce mixture. The pulp compositions of the middle layers are shown in table 5 below.

The total CTMP content represents how much CTMP constitutes the middle layer. Each column of type of CTMP displays how much of that total content each type of CTMP was added.

The average fibre length is of the total CTMP added. If only one type of CTMP was added, it is the average fibre length of that type. If a mix of CTMPs were added it is the average fibre length of that mix.

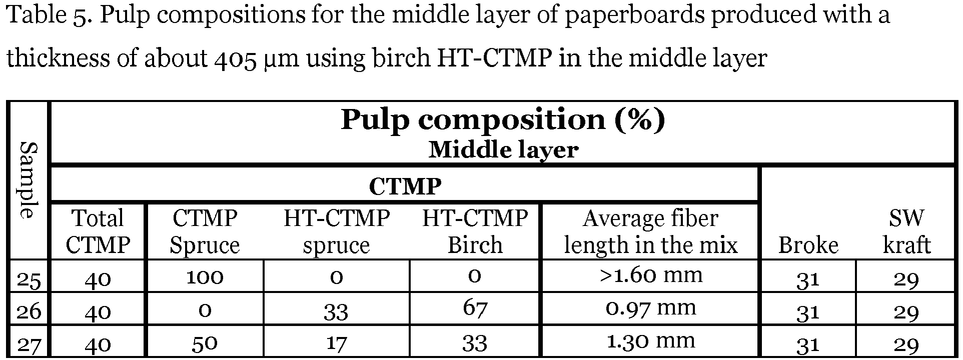

The boards were calendered using a line load of about 30 kN/m.

The results of those boards are presented in table 6 below.

**Table 6. Properties of the paperboards produced.**

| Sample | 25 | 26 | 27 |
|---|---|---|---|
| Bentsen surface roughness on the top layer (ml/min) | 85 | 30 | 55 |
| Bentsen surface roughness on the back layer (ml/min) | 825 | 730 | 750 |
| PPS roughness on the top layer (µm) | 1.50 | 1.05 | 1.20 |
| Total grammage of the paperboard (g/m²) | 305 | 285 | 295 |
| Bending resistance geometric* (mN) | 285 | 305 | 320 |

| | | | |
|---|---|---|---|
| *Geometric bending resistance = V(Bending resistance MD x Bending resistance CD) | | | |

### Manufacturing of paperboard with a thickness of about 405 µm using maple CTMP in the middle layer

For these middle layers a mixture of 50 wt% total content of CTMP, 38 wt% broke and 12 wt% SW kraft was used. The CTMP were mixtures of CTMP from Spruce, CTMP from birch and CTMP from maple. The pulp compositions together with fibre length of the CTMP-containing pulp mixes are shown in table 7.

The total CTMP content represents how much CTMP constitutes the middle layer. Each column of type of CTMP displays how much of that total content each type of CTMP was added.

The average fibre length is of the total CTMP added. If only one type of CTMP was added, it is the average fibre length of that type. If a mix of CTMPs were added it is the average fibre length of that mix.

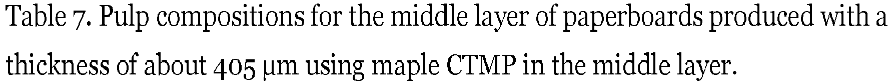

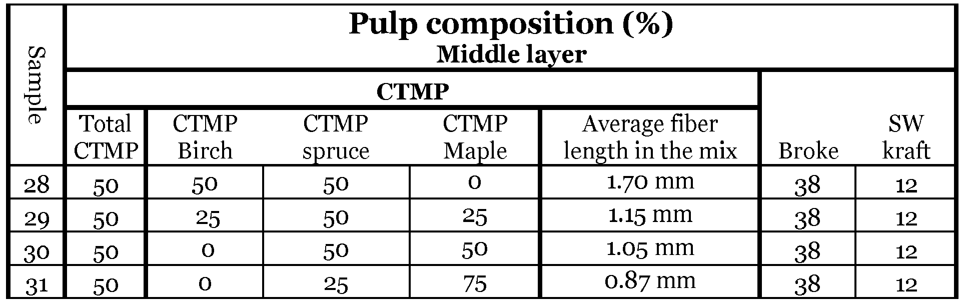

The boards were calendered using a line load of about 50 kN/m.

The results of those boards are presented in table 8 below.

**Table 8. Properties of the paperboards.**

| Sample | 28 | 29 | 30 | 31 |
|---|---|---|---|---|
| Specific formation of the paperboard (Vg/m) | 0.75 | 0.75 | 0.6 | 0.62 |
| PPS roughness on the top layer (µm) | 1.45 | 1.4 | 1.35 | 1.4 |

With an increased content of CTMP from maple, the formation decreases. A decreased formation means that the formation is even improved over using CTMP from birch.
As shown, the surface properties of the outer layers are improved when using a CTMP having an average fibre length of equal to or below 1.4 mm in the middle layer. It can, thus, be expected that satisfactory surface properties will be obtained also when the content of softwood kraft pulp is at least 50 % by dry weight in the top layer. Moreover, as the content of at least 50 wt% (top layer) and at least 80 wt% (back layer) of mechanically strong softwood kraft pulp in the outer layers provides a broke with relatively high amount of softwood kraft pulp, a combination of satisfactory surface properties and mechanical strength is provided.

## Claims

1. A multilayer paperboard comprising a top layer, a back layer and a middle layer, wherein:
- the middle layer is arranged between the top layer and the back layer;
- the top layer is formed from a top layer furnish comprising at least 50% by dry weight softwood kraft pulp;
- the middle layer is formed from a middle layer furnish, wherein broke pulp and chemithermomechanical pulp (CTMP) constitutes at least 85% by dry weight of the middle layer furnish, said broke pulp has essentially the same pulp composition as the multilayer paperboard and the average fibre length of said CTMP is equal to or below 1.4 mm as measured according to ISO 16065-2:2014; and
- the back layer is formed from a back layer furnish comprising at least 80% by dry weight softwood kraft pulp.

2. The paperboard of claim 1, wherein the top layer comprises at least 60% by dry weight, such as at least 70% by dry weight, such as at least 80% by dry weight, softwood kraft pulp.

3. The paperboard of claim 1 or 2, wherein the back layer comprises at least 90% by dry weight, such as at least 95% by dry weight softwood kraft pulp.

4. The paperboard of any one of the preceding claims, wherein the CTMP is formed from at least 50% by dry weight hardwood.

5. The paperboard of any one of the preceding claims, wherein at least 42% by dry weight, such as at least 50% by dry weight, such as at least 55% by dry weight of said broke pulp is derived from softwood kraft pulp.

6. The paperboard of any one of the preceding claims, wherein the middle layer further comprises microfibrillated cellulose (MFC).

7. The paperboard of claim 6, wherein the middle layer comprises MFC in an amount of 0.1-5.0 % by dry weight, such as 0.5-4 % by dry weight MFC.

8. The paperboard of any one of the preceding claims, wherein the middle layer furnish comprises at least 45% by dry weight, such as at least 50 % by dry weight, such as at least 60% by dry weight of CTMP.

9. The paperboard of any one of the preceding claims, wherein the softwood kraft pulp in the top layer furnish is bleached and/or the softwood kraft pulp in the bottom layer furnish is bleached.

10. The paperboard of any one of the preceding claims, wherein the broke pulp and CTMP constitutes at least 90% by dry weight, such as at least 95% by dry weight of the middle layer furnish.

11. The paperboard of any one of the preceding claims, wherein the top layer and back layer are coated.

12. The paperboard of claim 11, wherein the top layer is coated with more than one coating, such as a dual-layer coating or a triple-layer coating.

13. The paperboard of any one of the preceding claims, wherein the average fibre length of said CTMP is equal to or below 1.2 mm, such as equal to or below 1.1 mm as measured according to ISO 16065-2:2014.

14. A method for producing a multilayer paperboard comprising a top layer, a back layer and a middle layer, wherein the method comprises the following steps:
a. providing a top layer furnish comprising at least 50% by dry weight softwood kraft pulp;
b. providing a middle layer furnish, wherein broke pulp and chemithermomechanical pulp (CTMP) constitutes at least 85% by dry weight of the middle layer furnish, said broke pulp has essentially the same pulp composition as the multilayer paperboard and the average fibre length of said CTMP is equal to or below 1.4 mm as measured according to ISO 16065-2:2014;
c. providing a back layer furnish comprising at least 80% by dry weight softwood kraft pulp;
d. form a top layer from the top layer furnish, a middle layer from the middle layer furnish, and a back layer from the back layer furnish; and
e. form a paperboard from the top layer, middle layer and back layer so that the middle layer is arranged between the top layer and back layer.

15. The method of claim 14, wherein at least 42% by dry weight, such as at least 50% by dry weight, such as at least 55% by dry weight of all non-broke pulp supplied to the method is softwood kraft pulp.

16. Use of a paperboard according to any one of the claims 1-13 in packaging.
